# EUROPEAN PATENT APPLICATION

(11) **EP 4 714 612 A1**
(43) Date of publication of application: **25.03.2026**
(21) Application number: 25203483.0
(22) Date of filing: 19.09.2025
(51) Int. Cl.: B25J 9/00, B25J 17/02

(54) **ROBOT AND JOINT APPARATUS FOR ROBOT**

(30) Priority: 20.09.2024 CN 202411320355
(71) Applicant: BEIJING YOUZHUJU NETWORK TECHNOLOGY CO. LTD., Beijing 101299 (CN)
(72) Inventor: Tian, Jiawen, 100028 Beijing (CN)
(74) Representative: Isarpatent

(57) **Abstract**

Embodiments of the disclosure provide a joint apparatus for a robot and a robot. The joint apparatus includes a base; an output component arranged to be rotatable about mutually perpendicular three axes for three-degree-of-freedom motion, the output component comprising an outer peripheral portion; a first motor arranged on the base and comprising a first output shaft that rotates about a first axis of the three axes; a first transmission assembly having a first input end fixedly coupled to the first output shaft, a first output end rotatably coupled to the outer peripheral portion; and a composite drive assembly fixedly coupled to the first transmission assembly and comprising a second output end and a third output end rotatably coupled to the outer peripheral portion to drive the output component to rotate about a second axis and a third axis of the three axes.

## Description

### FIELD

Example embodiments of the present disclosure generally relate to the field of robots, and in particular, to a robot and a joint apparatus for the robot.

### BACKGROUND

With the development of industrial automation, robots have been widely used in various fields such as manufacturing, healthcare and service. In these applications, the multi-degree-of-freedom joint of the robot acts as a component of the actuator, and the performance of the robot directly affects the operation accuracy and efficiency of the whole system. However, the multi-degree-of-freedom joint of a traditional robot often relies on multiple independent joints to achieve different degrees of freedom, and this method can meet basic operation requirements, but has certain limitations in terms of integration, weight, size and cost.

### SUMMARY

An object of the present disclosure is to provide a joint apparatus for a robot and a robot to at least partially solve the above problems and / or other potential problems existing in joints of traditional robots.

In a first aspect of the present disclosure, a joint apparatus for a robot is provided. The joint apparatus comprises: a base adapted to be coupled to a first component of the robot; an output component adapted to be coupled to a second component of the robot and arranged to enable the first component to rotate relative to the second component about mutually perpendicular three axes for three-degree-of-freedom motion, the output component comprising an outer peripheral portion; a first motor arranged on the base and comprising a first output shaft that rotates about a first axis of the three axes; a first transmission assembly having a first input end fixedly coupled to the first output shaft, a first output end rotatably coupled to the outer peripheral portion to drive the output component to rotate about the first axis; and a composite drive assembly fixedly coupled to the first transmission assembly and comprising a second output end and a third output end rotatably coupled to the outer peripheral portion to drive the output component to rotate about a second axis and a third axis of the three axes.

According to embodiments of the disclosure, by fixedly coupling the first input end of the first transmission assembly to the first output shaft of the first motor, the robot can achieve rotation in the first degree of freedom while having a more compact structure. Meanwhile, by fixedly coupling the composite drive assembly to the first transmission assembly, the transmission path is simplified, the complexity of arranging a plurality of independent joints is reduced, and the overall cost of the robot is reduced. Further, the first output end of the first transmission assembly is rotatably coupled to the outer peripheral portion of the output component to drive the output component to rotate about the first axis, and the second output end and the third output end of the composite drive assembly are rotatably coupled to the outer peripheral portion of the output component to drive the output component to rotate about the second axis and the third axis of the three axes, so that the motion of the output component is more direct and efficient, the loss in the energy transmission process is reduced, and the attitude control accuracy of the output component is improved. Other benefits will be described below in connection with corresponding embodiments.

In some embodiments, the first transmission assembly comprises: a first connecting member fixedly coupled to the first output shaft as the first input end to rotate about the first axis, the first connecting member comprising a first receiving cavity; a first link coupled to an outer periphery of the first connecting member and extending in a direction parallel to the first axis; and a first output link, wherein one end of the first output link is rotatably coupled to a free end of the first link and the other end, as the first output end , is rotatably coupled to a first pivot point of the outer peripheral portion.

In some embodiments, the composite drive assembly comprises: a second motor fixedly arranged in the first receiving cavity of the first connecting member and comprising a second output shaft, an extending direction of the second output shaft being parallel to or coinciding with the first axis; and a second transmission assembly having a second input end fixedly coupled to the second output shaft and the other end rotatably coupled to a second pivot point of the outer peripheral portion as the second output end.

In some embodiments, the second transmission assembly comprises: a second connecting member fixedly coupled to the second output shaft as the second input end to rotate about the second output shaft, the second connecting member comprising a second receiving cavity; a second link coupled to an outer periphery of the second connecting member and extending in a direction parallel to the first axis; and a second output link having one end rotatably coupled to a free end of the second link and the other end rotatably coupled to the second pivot point of the outer peripheral portion as the second output end.

In some embodiments, the composite drive assembly further comprises: a third motor arranged in the second receiving cavity of the second connecting member and comprising a third output shaft, an extending direction of the third output shaft being parallel to or coinciding with the first axis; and a third transmission assembly having a third input end fixedly coupled to the third output shaft and the other end rotatably coupled to a third pivot point of the outer peripheral portion as the third output end.

In some embodiments, the third transmission assembly comprises: a third connecting member fixedly coupled to the third output shaft as the third input end to rotate about the third output shaft; a third link coupled to an outer periphery of the third connecting member and extending in a direction parallel to the first axis; and a third output link having one end rotatably coupled to a free end of the third link and the other end rotatably coupled to the third pivot point of the outer peripheral portion as the third output end.

In some embodiments, the first output link, the second output link, and the third output link have the same structure and size, and the first pivot point, the second pivot point, and the third pivot point are evenly distributed on the outer periphery portion.

In some embodiments, the first output link, the second output link, and the third output link are respectively have an arc shape, and a center of the arc shape is concentric with a motion center of the three-degree-of-freedom motion of the output component.

In some embodiments, the first link, the second link and the third link respectively comprise a bent portion formed at the free end, and the bent portion faces a motion center of the three-degree-of-freedom of the output component.

In some embodiments, the joint apparatus further comprises: a support column coupled to the third connection member and extending in a direction parallel to the first axis; and a support ball rotatably coupled to an end of the support column away from the third connecting member, wherein the output component comprises a coupling hole, and the output component is slidably sleeved on the support ball through the coupling hole, so that a motion center of the three-degree-of-freedom motion of the output component coincides with a sphere center of the support ball.

In some embodiments, the output component comprises: a coupling ring having the outer peripheral portion; and a pair of limiting rings arranged at axial ends of the coupling ring and having an inner diameter smaller than a spherical diameter of the support ball, respectively, so that the output component is slidably sleeved on the support ball.

In a second aspect of the present disclosure, a robot is provided. The robot comprises a first component and a second component and at least one joint apparatus of the first aspect, wherein the joint apparatus is coupled between the first component and the second component, so that the first component rotates relative to the second component about mutually perpendicular three axes for three-degree-of-freedom motion.

It should be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic structural diagram of a joint apparatus according to some embodiments of the present disclosure;
FIG. 2 illustrates an exploded view of a second connecting member and a third motor according to some embodiments of the present disclosure;
FIG. 3 illustrates an exploded view of an output component according to some embodiments of the present disclosure; and
FIG. 4 illustrates a schematic structural diagram of an output component according to some embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to embodiments set forth herein, but rather, these embodiments are provided for a more thorough and complete understanding of the present disclosure. It should be understood that the drawings and embodiments of the present disclosure are for exemplary purposes only and are not intended to limit the scope of the present disclosure.

In the description of embodiments of the present disclosure, the terms "comprising" and the like should be understood to include "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

The problem of a multi-degree-of-freedom joint of a traditional robot is briefly mentioned above. Specifically, in an application scenario in which a multi-degree-of-freedom joint of a robot can complete three posture adjustments of Roll, Pitch, and Yaw, a traditional multi-degree-of-freedom joint is implemented by a plurality of independent joints, which has complex structure and cumbersome control algorithm. Each joint requires an independent drive and sensor system to achieve its predetermined function. This multi-joint structure not only increases the complexity of the multi-degree-of-freedom joint, but also makes the control system complex.

Secondly, the traditional multi-degree-of-freedom joint is easily affected by accumulative errors in practical applications. Since each joint generates a certain positional deviation, when these deviations accumulate along the entire kinematic chain, the attitude control of the multi-degree-of-freedom joint is not accurate enough.

Furthermore, the traditional multi-degree-of-freedom joint increases the overall size and weight of the robot. Each additional joint means more mechanical components, larger volume, and heavier mass. This not only makes the operation of the multi-degree-of-freedom joint in a narrow space difficult, but also increases the cost of transportation and installation. In addition, the large volume and weight also cause the inertia of the multi-degree-of-freedom joint greater during rapid motion, which further affects the dynamic response speed and precision thereof.

In addition, the complexity of the traditional multi-degree-of-freedom joint structure also increases manufacturing cost and maintenance difficulty. A finer processing technology and a higher assembly precision are required in the manufacturing process, and the production cost is increased.

In order to solve or at least partially solve the above problems or other potential problems of the robot in the traditional solution, embodiments of the present disclosure provide a joint apparatus for a robot and a robot solution. According to the solution of embodiments of the present disclosure, the output component of the joint apparatus is arranged to be rotatable about mutually perpendicular three axes for three-degree-of-freedom motion, and the output component comprises an outer peripheral portion. Further, a first motor of the joint apparatus is arranged on the base, and the first motor comprises a first output shaft rotatable about a first axis of the three axes. Further, the first input end of the first transmission assembly of the joint apparatus is fixedly connected to the first output shaft of the first motor, and the first output end of the first transmission assembly is connected to the outer peripheral portion of the output component in a rotational coupling manner, so that the output component rotates about the first axis. Further, the composite drive assembly of the joint apparatus is fixedly connected to the first transmission assembly, and the composite drive assembly comprises a second output end and a third output end, and the second output end and the third output end are respectively rotatably connected to the outer peripheral portion of the output component, so as to drive the output component to rotate about the second axis and the third axis of the three axes.

In this way, the joint apparatus of the multi-degree-of-freedom robot which has a compact structure, precise control, small size, low cost and high reliability can be provided.

Embodiments of the present disclosure provide a joint apparatus for a robot and a robot. A robot according to an embodiment of the present disclosure may refer to any suitable robot, for example, may include, but is not limited to: a humanoid robot, a crawling robot, an industrial robot, a service robot, a full-automatic robot, a semi-automatic robot, a remote control robot, a robotic arm robot, and the like.

For example, an example structure of the robot according to embodiments of the present disclosure is described by taking a humanoid robot as an example. The humanoid robot may comprise the following main components: a head, a torso, an arm, a hand, a leg, and a foot. These components may be connected by the joint apparatus according to embodiments of the present disclosure to mimic the natural posture and motion of a human. Their connection design not only needs to ensure the flexibility between components, but also needs to have certain stability and strength to deal with complex actions and loads.

The head is usually mounted at the top of the torso, and is responsible for sensing and processing external information. The head may comprise a camera (equivalent to "eyes"), a microphone (equivalent to "ears"), and various sensors for sensing the surrounding environment and interacting with the outside world. The head is connected to the torso through a neck joint. The joint can adopt the joint apparatus according to the embodiment of the present disclosure, so that the robot can flexibly look around.

The torso is the most core part of the humanoid robot, and houses a battery, a processor, a main control board and a core sensor. It is not only the connection center of other components but is also responsible for the stability of the whole robot. The torso requires a strong structure to support the upper body and the lower body, and also needs to maintain a certain flexibility, so that the robot can perform complex motions, such as bending, turning and the like. Generally, by connecting the shoulder and hip joints to the arms and legs, the design inside the torso must ensure that sufficient space is reserved for the joint motors, cables, and control systems. Similar to the neck joint, the shoulder joint and the hip joint can also adopt the joint apparatus of the embodiment of the present disclosure, thereby realizing multi-degree-of-freedom rotation.

The arm is connected to the torso through the shoulder joint, and is usually composed of an upper arm, a forearm and the hand. The shoulder joint is multi-degree-of-freedom, and can achieve front-rear, left-right swing and rotation motion. The upper arm is connected to the forearm through an elbow joint. The design of the arm needs to balance between flexibility and load capability, particularly when the robot performs handling or grabbing tasks, and needs to bear corresponding force.

The hand is a key part of the robot to perform fine operations, usually comprises a plurality of fingers, each finger has a plurality of joints, and the joints may be controlled by a micro servo motor. The hand is connected to the forearm through a wrist joint, the wrist joint generally has a multi-degree-of-freedom rotation function, or the joint apparatus of embodiments of the present disclosure may also be used, thereby allowing the hand to freely adjust the angle and direction. The design of the hand emphasizes precision so that the robot can simulate actions such as grasping, pinching and the like of a human hand.

The leg is connected to the torso through the hip joint and is an important part for supporting the robot to walk. The hip joint is a multi-degree-of-freedom joint and is responsible for controlling the front -rear swinging, lateral swinging and rotation actions of the leg. The leg is divided into a thigh and a shank connected by a knee joint. The main function of the knee joint is flexion and extension, and supports the robot to remain balance during walking and standing. To achieve stable gait control, the leg is usually equipped with multiple sensors, such as angle sensors and accelerometers, for monitoring changes in robot pose and gait in real time.

The foot is connected with the shank through the ankle joint, and the ankle joint is responsible for finely adjusting the posture of the foot to ensure that the robot is balanced and stable under different ground conditions. The design of the foot requires sufficient contact area to support the body weight, while the foot bottom is typically equipped with a pressure sensor for monitoring the contact condition of the robot with the ground, thereby adjusting the gait.

As mentioned above, one or more of the neck joint, the shoulder joint, the hip joint, the wrist joint, and the ankle joint (or any other suitable joint apparatus connecting the two components of the robot) of the robot may be implemented by using the joint apparatus according to the embodiment of the present disclosure, thereby not only meeting the flexible motion requirement of these joints, but also having sufficient stability and bearing capacity, thereby ensuring that the robot can maintain balance when executing the task and effectively respond to various external environments, thereby improving the reliability and stability of the whole robot.

In addition, the joint apparatus 100 according to the embodiments of the present disclosure is intended to achieve a high degree of integration, enable it to operate flexibly in a narrow space, and ensure that the joint apparatus 100 has extremely high precision when performing rolling, pitching and yawing motions through the optimized drive system and control algorithm. The joint apparatus 100 not only reduces the overall size and weight of the robot, but also improves its adaptability and reliability in a complex environment.

The general structure of the robot is described above mainly by taking a humanoid robot as an example. It should be understood that this is merely illustrative and is not intended to limit the scope of the present disclosure. The joint apparatus according to embodiments of the present disclosure may be applicable to any other type of robot having a plurality of components that require a multi-degree-of-freedom connection relative to each other.

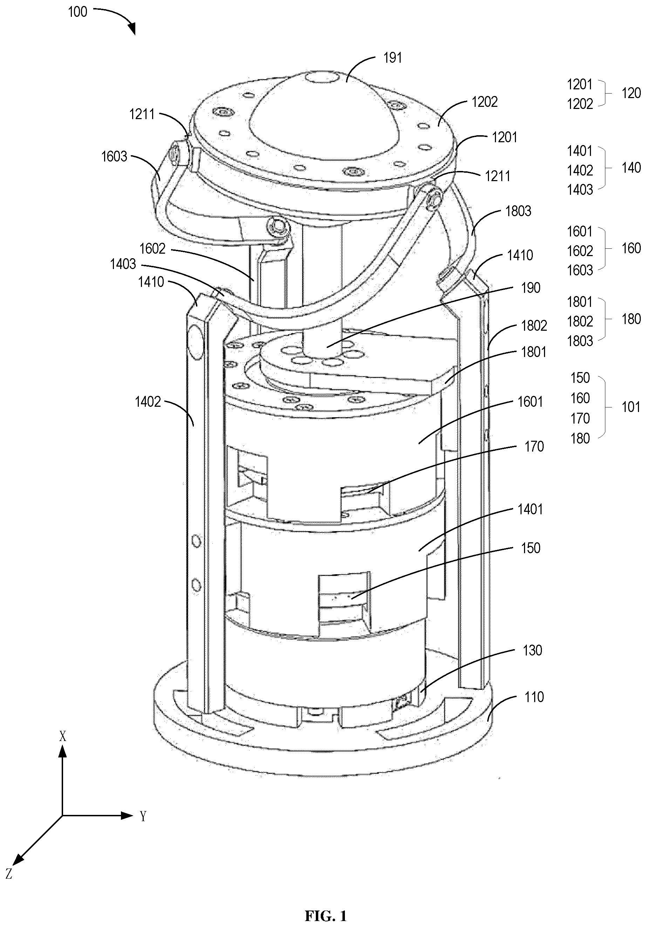

An example structure of the joint apparatus 100 of the robot will be described below with reference to FIGS. 1-4. FIG. 1 is a schematic structural diagram of a joint apparatus 100 according to some embodiments of the present disclosure. As shown in FIG. 1, the joint apparatus 100 according to an embodiment of the present disclosure generally comprises a base 110, an output component 120, a first motor 130, a first transmission assembly 140, and a composite drive assembly 101. Through cooperative work of the first motor 130, the first transmission assembly 140 and the composite drive assembly 101, three-degree-of-freedom rotational motion of the output component 120 about mutually perpendicular three axes is achieved, and more precise motion control can be achieved.

Specifically, the base 110 and the output component 120 can be coupled to two components of the robot, respectively. The two components may refer to two components having a three-degree-of-freedom motion relationship, such as two components connected by a neck joint, a shoulder joint, a hip joint, a wrist joint, or an ankle joint. For ease of description, these two components will hereinafter be referred to as a first component and a second component. The base 110 of the joint apparatus 100 can be coupled to the first component, and the output component 120 can be coupled to the second component, so that the first component can rotate relative to the second component about mutually perpendicular three axes, thereby achieving the three-degree-of-freedom motion between the two, thereby meeting the requirements of various complex application scenarios.

It can be understood that, in robotics, the three mutually perpendicular axes generally refer to an X-axis, a Y-axis, and a Z-axis in a three-dimensional Cartesian coordinate system. When describing that the joints of one robot can move or rotate on these axes, it means that it can move or rotate independently in each of these three directions in three-dimensional space.

If the joint can rotate about the three axes, it means that it can provide Roll, Pitch, and Yaw motions, i.e., Roll is a rotation about the X-axis. Pitch is a rotation about the Y-axis. Yaw is a rotation about the Z-axis.

Further, the output component 120 comprises an outer peripheral portion 1211. The shape and structure of the outer peripheral portion 1211 may ensure efficient connection and cooperation with other components. During rotation about three axes, the outer peripheral portion 1211 may bear forces and torques from various directions, and may also transmit power to other related components.

The outer peripheral portion 1211 may be made of high-strength and high-precision materials, and undergoes precision machining and surface treatment to ensure stability and reliability of the outer peripheral portion 1211 during motion, thereby achieving high-precision motion control, which is not specifically limited in embodiments of the present disclosure.

In the joint apparatus 100, the base 110 is arranged. In some embodiments, the base 110 may be made of a high-strength material, has good stability and bearing capability, and provides support for the entire joint apparatus 100.

Further, the first motor 130 is precisely arranged on the base 110, and the position of the first motor 130 can ensure that the operation of the first motor 130 is not interfered by other components, and also facilitates power transmission between the first motor 130 and other components. The first motor 130 may be a high-performance motor comprising a first output shaft rotatable about a first axis X of three axes.

The first input end of the first transmission assembly 140 is fixedly coupled to the first output shaft of the first motor 130, ensuring that the power output from the first motor 130 can be transmitted to the first transmission assembly 140 efficiently and without loss. Meanwhile, the first output end of the first transmission assembly 140 is rotatably coupled to the outer peripheral portion 1211 of the output component 120.

When the first motor 130 works, the first output shaft of the first motor 130 rotates about the first axis X, and the power is transmitted to the first transmission assembly 140 via the fixedly coupled first input end, and is output from the first output end, thereby driving the output component 120 to rotate about the first axis X. This transmission mode not only ensures the accuracy and stability of power transmission, but also enables the output component 120 to achieve precise rotation control in the direction of the first axis X, thereby achieving a highly integrated three-degree-of-freedom motion for the whole joint apparatus 100.

The composite drive assembly 101 is fixedly coupled to the first transmission assembly 140 to enable the output component to generate motion about the other two axes. When the first motor 130 works, the composite drive assembly 101 may rotate with the first transmission assembly 140 about the first axis X.

Further, the composite drive assembly 101 comprises two output ends, namely a second output end and a third output end. Both output ends are connected to the outer peripheral portion 1211 of the output component 120 in a rotatably coupled manner. Therefore, this connection manner may enable the composite drive assembly 101 to accurately transmit the drive force to the output component 120, thereby achieving the rotation of the output component 120 about the second axis Y and the third axis Z of the three axes.

For example, after the composite drive assembly 101 receives the instruction of the control system, it transmits power to the second output end and the third output end, respectively. The second output end and the third output end rotate at a predetermined angle and speed according to requirements of the instruction, so as to drive the output component 120 to correspondingly move about the second axis Y and the third axis Z.

In this way, the composite drive assembly 101 and the first transmission assembly 140 work cooperatively to implement the three-degree-of-freedom motion control of the output component 120. This not only improves the motion precision of the robot joint, but also enables the whole joint apparatus 100 to have higher integration and reliability, and can meet the requirements of various complex application scenarios.

In some embodiments, the first transmission assembly 140 comprises a first connecting member 1401, a first link 1402, and a first output link 1403. First, the first connecting member 1401, as the first input end, is fixedly coupled to the first output shaft of the first motor 130, so as to rotate about the first axis X along with the first output shaft. In addition, the first connecting member 1401 further comprises a first receiving cavity, and the first receiving cavity may be configured to accommodate the second motor 150 in the composite drive assembly 101 described below.

Further, the first link 1402 is coupled to an outer periphery of the first connecting member 1401. The first link 1402 extends in a direction parallel to the first axis X. In this way, the first link 1402 can generate a corresponding motion along with the rotation of the first connecting member 1401.

Further, one end of the first output link 1403 is rotatably coupled to a free end of the first link 1402, and the other end of the first output link 1403, as the first output end, is rotatably coupled to a first pivot point of the outer peripheral portion 1211 of the output component 120. In this way, the motion of the first link 1402 can be transmitted to the output component 120 through the first output link 1403, and finally drives the output component 120 to rotate about the first axis X.

Therefore, each component of the first transmission assembly 140 cooperates with each other to form a complete transmission system, which achieves power transmission and motion control from the first motor 130 to the output component 120, and ensures normal operation and precise three-degree-of-freedom motion of the whole joint apparatus 100.

In some embodiments, the composite drive assembly 101 comprises a second motor 150 and a second transmission assembly 160. Further, the second motor 150 is fixedly arranged in the first receiving cavity of the first connecting member 1401. In this arrangement, the space of the first receiving cavity can be fully utilized, so that the whole joint apparatus 100 is more compact. Meanwhile, the second motor 150 has a second output shaft, and the extension direction of the second output shaft is parallel to or coincides with the first axis X to ensure high efficiency and direct performance of power transmission.

Further, the second input end of the second transmission assembly 160 is fixedly coupled to the second output shaft of the second motor 150, so as to receive power from the second motor 150. The other end of the second transmission assembly 160 is rotatably coupled to a second pivot point of the outer peripheral portion 1211 as the second output end. In this way, the power generated by the second motor 150 is transmitted through the second transmission assembly 160.

In some embodiments, the second transmission assembly 160 comprises a second connecting member 1601, a second link 1602, and a second output link 1603. Further, the second connecting member 1601, as the second input end, is connected to the second output shaft in a stable coupling manner, so as to rotate about the second output shaft. The second connecting member 1601 is internally provided with a second receiving cavity. The second receiving cavity may be used to accommodate the third motor 170 described below.

Further, the second link 1602 is coupled to the outer periphery of the second connecting member 1601 and extends in a direction parallel to the first axis X, so that the second link 1602 can move correspondingly with the rotation of the second connecting member 1601.

Further, one end of the second output link 1603 is rotatably coupled to a free end of the second link 1602, ensuring an efficient transfer of motion between the two. Meanwhile, the other end of the second output link 1603 is rotatably coupled to the second pivot point of the outer peripheral portion 1211 as the second output end. In this way, the motion of the second link 1602 can be transmitted to the output component 120 via the second output link 1603.

Therefore, the components of the second transmission assembly 160 cooperate with each other, so that power transmission and motion control from the second motor 150 to the output component 120 can be achieved, thereby providing a guarantee for the overall performance of the joint apparatus 100.

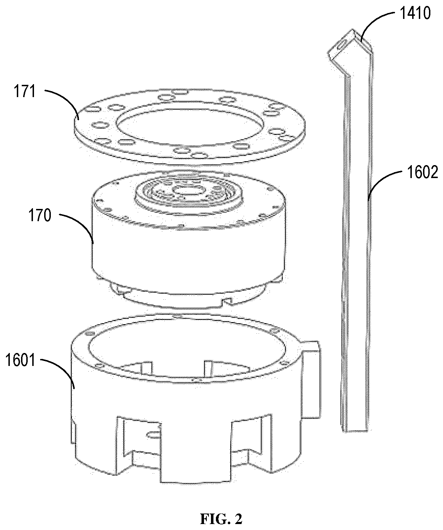

FIG. 2 illustrates an exploded view of the second connecting member 1601 and a third motor according to some embodiments of the present disclosure. As shown in FIGS. 1 and 2, in some embodiments, the composite drive assembly 101 further comprises a third motor 170 and a third transmission assembly 180.

Further, the third motor 170 is arranged in the second receiving cavity of the second connecting member 1601, so that the space of the second receiving cavity can be fully utilized, making the structure of the whole joint apparatus 100 more compact, and conducive to achieving high integration. The third motor 170 has a third output shaft, and an extension direction of the third output shaft is parallel to or coincides with the first axis X, which facilitates direct transmission of power, reduces energy loss, and improves transmission efficiency. For example, the third motor 170 may be fixed in the second receiving cavity of the second connecting member 1601 through the package lid 171.

Further, the third input end of the third transmission assembly 180 is fixedly coupled to the third output shaft to ensure that power from the third motor 170 can be stably received. Meanwhile, the other end of the third transmission assembly 180 serves as the third output end and is rotatably coupled to the third pivot point of the outer peripheral portion 1211. In this way, the power generated by the third motor 170 can be accurately transmitted to the output component 120 via the third transmission assembly 180.

Therefore, the composite drive assembly 101 provides power for the rotation of the output component 120 about the second axis Y and the third axis Z by cooperation of the third motor 170 and the third transmission assembly 180, further enhancing the motion performance and the control precision of the entire joint apparatus 100.

In some embodiments, the third transmission assembly 180 comprises a third connecting member 1801, a third link 1802, and a third output link 1803.

Further, the third connecting member 1801 is connected to the third output shaft as the third input end in a fixed coupling manner, so as to rotate about the third output shaft. This connection ensures that the power generated by the third motor 170 can be stably transmitted to the third transmission assembly 180.

Further, the third link 1802 is coupled to the outer periphery of the third connecting member 1801 and extends in a direction parallel to the first axis X, so that the third link 1802 can generate a corresponding motion along with the rotation of the third connecting member 1801.

Further, one end of the third output link 1803 is rotatably coupled to a free end of the third link 1802, ensuring an effective transmission of motion therebetween. Meanwhile, the other end of the third output link 1803, as the third output end, is rotatably coupled to the third pivot point of the outer peripheral portion 1211. In this way, the motion of the third link 1802 can be transmitted to the output component 120 via the third output link 1803.

Therefore, the components of the third transmission assembly 180 cooperate with each other to accurately achieve the power transmission and motion control from the third motor 170 to the output component 120, thereby providing a guarantee for the overall performance of the joint apparatus 100.

Through cooperation of the composite drive assembly 101 and the first transmission assembly 140, the present joint apparatus 100 can realize precise rotation of the output component 120 about mutually perpendicular three axes, thereby meeting various complicated motion control requirements. The high integration joint apparatus 100 not only improves the motion accuracy, but also makes the whole joint apparatus 100 more compact and reliable, and is adapted to various industrial automation fields.

In some embodiments, in the joint apparatus 100, the first output link 1403, the second output link 1603, and the third output link 1803 may have the same structure and size. First, the same structure and size can make the manufacturing process more convenient and reduce the production cost. Secondly, the same structure is more convenient to maintain and replace, and the maintainability of the joint apparatus 100 is improved.

Meanwhile, the first pivot point, the second pivot point and the third pivot point are evenly distributed on the outer peripheral portion 1211. Through even distribution of the three pivot points, the output component 120 can be more evenly stressed and move more stably when rotating about three axes. The motion precision and control precision of the joint apparatus 100 can be effectively improved, and vibration and errors are reduced. Moreover, the three pivot points arranged evenly may make the whole joint apparatus 100 more symmetrical and aesthetically pleasing. In addition, the bearing capacity of the joint apparatus 100 can also be improved through even distribution, so that the joint apparatus 100 can adapt to more complex working environments and heavier loads.

In some embodiments, the first output link 1403, the second output link 1603, and the third output link 1803 are respectively arranged in an arc shape.

Further, the three arc-shaped output links can better adapt to the three-degree-of-freedom motion of the output component 120. When the output component 120 rotates about mutually perpendicular three axes, the three arc-shaped output links can flexibly adjust the angle and the position along with the change of the motion to ensure smooth transmission of power.

Second, the three arc-shaped output links may make the structure of the overall joint apparatus 100 more compact. Compared with other forms of links, the arc-shaped links are more efficient in space utilization, and can achieve complex motion control in limited space.

At the same time, the center of the arc-shaped first output link 1403, the second output link 1603 and the third output link 1803 are concentric with the motion center of the three-degree-of-freedom motion of the output component 120. Therefore, by means of concentric arrangement, the three output links can always rotate around the motion center during the motion, thereby ensuring the accuracy and stability of the motion. On the other hand, this concentric arrangement can also reduce the additional torques and stresses caused by non-concentricity, reduce wear and energy loss of the joint apparatus 100, and improve the service life and reliability of the joint apparatus 100. At the same time, the concentric arrangement also makes the motion of the whole joint apparatus 100 smoother and more fluent, improves the motion accuracy and control accuracy, and meets the precise control of the multi-degree-of-freedom motion of the end actuator by the high integrated joint apparatus 100.

In some embodiments, the first link 1402, the second link 1602, and the third link 1802 may each include a bent portion 1410 formed at a free end.

Further, the bent portion 1410 can face the motion center of the three-degree-of-freedom motion of the output component 120, so that the link can more effectively apply a force to the output component 120 when transmitting power. In this way, the power transmission efficiency can be improved, the energy loss can be reduced, and the output component 120 can be ensured to perform three-degree-of-freedom motion more stably.

Secondly, the bent portion 1410 can make the link more reasonable in space layout. Through the bent portion 1410, the overall structure of the joint apparatus 100 can be better adapted, avoiding interference with other components, and improving compactness and integration of the whole apparatus.

In some embodiments, the joint apparatus 100 further comprises a support column 190 and a support ball 191.

Further, the support column 190 is coupled to the third connecting member 1801 and extends in a direction parallel to the first axis X. This connection may enable the support column 190 to be stably fixed in the joint apparatus 100 to provide reliable support for the support ball 191.

Further, the support ball 191 is rotatably coupled to an end of the support column 190 away from the third connecting member 1801. When the output component 120 performs three-degree-of-freedom motion, the support ball 191 can bear the force from different directions, thereby effectively preventing the structural deformation, greatly improving the overall structural rigidity of the joint apparatus 100, and ensuring that the output component 120 will not experience any deviation or instability when performing the three-degree-of-freedom motion. In addition, the support ball 191 can reduce friction between the end actuator and the output component 120, so that the output component 120 is smoother during motion. For example, the support ball 191 may be mounted on the support column 190 through a cylindrical hole inside the support ball 191.

Further, the output component 120 comprises a coupling hole 1203. The output component 120 is slidably sleeved on the support ball 191 via the coupling hole 1203. In this way, the output component 120 can perform three-degree-of-freedom motion with the support ball 191 as a center. In addition, by means of this arrangement, it can be ensured that the motion center of the three-degree-of-freedom motion of the output component 120 coincides with the sphere center of the support ball.

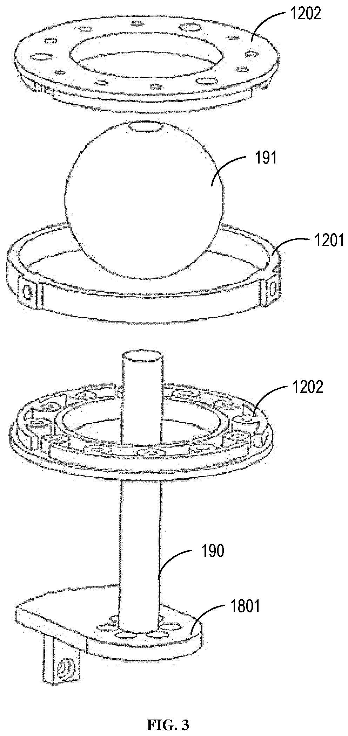

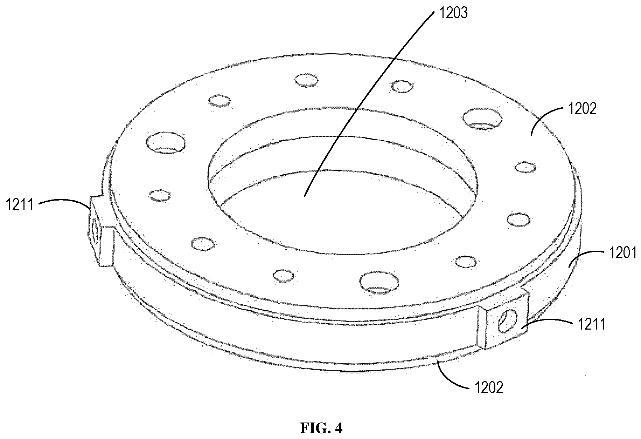

FIG. 3 illustrates an exploded view of the output component 120 according to some embodiments of the present disclosure. FIG. 4 illustrates a schematic structural diagram of the output component 120 according to some embodiments of the present disclosure. As shown in FIGS. 3 and 4, in some embodiments, the output component 120 comprises a coupling ring 1201 and a pair of limiting rings 1202. The pair of limiting rings 1202 may be fixed on the coupling ring 1201 by screwing, which is not specifically limited in the embodiments of the present disclosure.

Further, the coupling ring 1201 has the outer peripheral portion 1211 mentioned above. The coupling ring 1201 serves as a main body portion of the output component 120 and cooperates with other components to achieve three-degree-of-freedom motion of the output component 120 about mutually perpendicular three axes. For example, the coupling ring 1201 may be coupled with the first output link 1403 via the first pivot point, coupled with the second output link 1603 via the second pivot point, coupled with the third output link 1803 via the third pivot point, thereby achieving the three-degree-of-freedom motion of output component 120 about mutually perpendicular three axes.

Further, the pair of limiting rings 1202 are arranged at axial ends of the coupling ring 1201. The pair of limiting rings 1202 respectively have an inner diameter smaller than the spherical diameter of the support ball 191. When the output component 120 is slidably sleeved on the support ball 191, the pair of limiting rings 1202 can effectively limit the axial motion of the output component 120, thereby ensuring that the output component 120 does not disengage from the support ball 191 when performing the three-degree-of-freedom motion.

Therefore, the combination of the coupling ring 1201 and the pair of limiting rings 1202 may make the structure of the output component 120 more stable and reliable.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A joint apparatus for a robot ,comprising:
a base (110) adapted to be coupled to a first component of the robot;
an output component (120) adapted to be coupled to a second component of the robot and arranged to enable the first component to rotate relative to the second component about mutually perpendicular three axes for three-degree-of-freedom motion, the output component (120) comprising an outer peripheral portion (1211);
a first motor (130) arranged on the base (110) and comprising a first output shaft that rotates about a first axis (X) of the three axes;
a first transmission assembly (140) having a first input end fixedly coupled to the first output shaft, and a first output end rotatably coupled to the outer peripheral portion (1211) to drive the output component (120) to rotate about the first axis (X); and
a composite drive assembly (101) fixedly coupled to the first transmission assembly (140) and comprising a second output end and a third output end rotatably coupled to the outer peripheral portion (1211) to drive the output component (120) to rotate about a second axis (Y) and a third axis (Z) of the three axes.

2. The joint apparatus of claim 1, wherein the first transmission assembly (140) comprises:
a first connecting member (1401) fixedly coupled to the first output shaft as the first input end to rotate about the first axis (X), the first connecting member (1401) comprising a first receiving cavity;
a first link (1402) coupled to an outer periphery of the first connecting member (1401) and extending in a direction parallel to the first axis (X); and
a first output link (1403), wherein one end of the first output link (1403) is rotatably coupled to a free end of the first link (1402), and the other end, as the first output end, is rotatably coupled to a first pivot point of the outer peripheral portion (1211).

3. The joint apparatus of claim 2, wherein the composite drive assembly (101) comprises:
a second motor (150) fixedly arranged in the first receiving cavity of the first connecting member (1401) and comprising a second output shaft, wherein an extending direction of the second output shaft is parallel to or coinciding with the first axis (X); and
a second transmission assembly (160) having a second input end fixedly coupled to the second output shaft and the other end rotatably coupled to a second pivot point of the outer peripheral portion (1211) as the second output end.

4. The joint apparatus of claim 3, wherein the second transmission assembly (160) comprises:
a second connecting member (1601) fixedly coupled to the second output shaft as the second input end to rotate about the second output shaft, the second connecting member (1601) comprising a second receiving cavity;
a second link (1602) coupled to an outer periphery of the second connecting member (1601) and extending in a direction parallel to the first axis (X); and
a second output link (1603) having one end rotatably coupled to a free end of the second link (1602) and the other end rotatably coupled to the second pivot point of the outer peripheral portion (1211) as the second output end.

5. The joint apparatus of claim 4, wherein the composite drive assembly (101) further comprises:
a third motor (170) arranged in the second receiving cavity of the second connecting member (1601) and comprising a third output shaft, wherein an extending direction of the third output shaft is parallel to or coinciding with the first axis (X); and
a third transmission assembly (180) having a third input end fixedly coupled to the third output shaft and the other end rotatably coupled to a third pivot point of the outer peripheral portion (1211) as the third output end.

6. The joint apparatus of claim 5, wherein the third transmission assembly (180) comprises:
a third connecting member (1801) fixedly coupled to the third output shaft as the third input end to rotate about the third output shaft;
a third link (1802) coupled to an outer periphery of the third connecting member (1801) and extending in a direction parallel to the first axis (X); and
a third output link (1803) having one end rotatably coupled to a free end of the third link (1802) and the other end rotatably coupled to the third pivot point of the outer peripheral portion (1211) as the third output end.

7. The joint apparatus of claim 6, wherein the first output link (1403), the second output link (1603), and the third output link (1803) have the same structure and size, and the first pivot point, the second pivot point, and the third pivot point are evenly distributed on the outer peripheral portion (1211).

8. The joint apparatus of claim 7, wherein the first output link (1403), the second output link (1603) and the third output link (1803) respectively have an arc shape, and a center of the arc shape is concentric with a motion center of the three-degree-of-freedom motion of the output component (120).

9. The joint apparatus of claim 6, wherein the first link (1402), the second link (1602) and the third link (1802) respectively comprise a bent portion (1410) formed at the free end, and the bent portion (1410) faces a motion center of the three-degree-of-freedom motion of the output component (120).

10. The joint apparatus of any of claims 6-9, further comprising:
a support column (190) coupled to the third connecting member (1801) and extending in a direction parallel to the first axis (X); and
a support ball (191) rotatably coupled to an end of the support column (190) away from the third connecting member (1801),
wherein the output component (120) comprises a coupling hole (1203), and the output component (120) is slidably sleeved on the support ball (191) through the coupling hole (1203), so that a motion center of the three-degree-of-freedom motion of the output component (120) coincides with a sphere center of the support ball (191).

11. The joint apparatus of claim 10, wherein the output component (120) comprises:
a coupling ring (1201) having the outer peripheral portion (1211); and
a pair of limiting rings (1202) arranged at axial ends of the coupling ring (1201) and having an inner diameter smaller than a spherical diameter of the support ball (191), respectively, so that the output component (120) is slidably sleeved on the support ball (191).

12. A robot comprising:
a first component and a second component; and
at least one joint apparatus of any of claims 1-11, coupled between the first component and the second component to rotate the first component relative to the second component about mutually perpendicular three axes for three-degree-of-freedom motion.
